# EUROPÄISCHE PATENTSCHRIFT

(11) **EP 1 530 705 B1**
(45) Veröffentlichungstag und Bekanntmachung des Hinweises auf die Patenterteilung: **08.08.2007**
(21) Anmeldenummer: 03793622.6
(22) Anmeldetag: 18.06.2003
(51) Int. Cl.: G01C 19/72, G01C 21/00

(54) **VERFAHREN ZUR BESTIMMUNG UND KOMPENSATION DES DURCH WELLENLÄNGENÄNDERUNG VERURSACHTEN SKALENFAKTORFEHLERS IN EINEM GPS-GESTÜTZTEN INERTIALEN KURS- UND LAGEREFERENZSYSTEM**
METHOD FOR DETERMINING AND COMPENSATING THE SCALE FACTOR ERROR CAUSED BY A WAVELENGTH CHANGE IN A GPS-BASED INERTIAL NAVIGATION SYSTEM
PROCEDE DE DETERMINATION ET DE COMPENSATION DE L'ERREUR DE FACTEUR D'ECHELLE DUE A UNE VARIATION DE LONGUEUR D'ONDE DANS UN SYSTEME DE NAVIGATION PAR INERTIE ASSISTE PAR GPS

(30) Priorität: 20.08.2002 DE 10238061
(43) Veröffentlichungstag der Anmeldung: 18.05.2005
(73) Patentinhaber: LITEF GmbH, 79115 Freiburg (DE)
(72) Erfinder: KRINGS, Manfred, 79232 March (DE)
(74) Vertreter: Müller, Frithjof E.
(86) Internationale Anmeldenummer: PCT/EP2003/007830
(87) Internationale Veröffentlichungsnummer: WO 2004/023077

(56) Entgegenhaltungen:
- EP-A- 0 288 032
- US-A- 5 067 084
- US-A- 5 365 338

## Beschreibung

Die Erfindung betrifft ein Verfahren zur Bestimmung und Kompensation des durch Wellenlängenänderung bei mehrachsigen, aus einer gemeinsamen Lichtquelle gespeisten faseroptischen Gyroskops (FOG) verursachten Skalenfaktorfehlers in einem GPS-gestützten, mit Kalman-Korrekturfilter ausgerüsteten inertialen Kurs-und Lagereferenzsystem (INS-System).

Aus DE 196 51 543 C1 ist es für Kurs- und Lagereferenzsysteme mit über GPS-Empfänger gestütztem Inertialsystem bekannt, bei iterativer Korrekturbewertung einer Plattformrechnung mittels eines Kalman-Filters, die über den GPS-Empfänger bereitgestellten Kurs- und Lagewinkel von den entsprechenden durch einen Inertialsensor gelieferten Daten zu subtrahieren, um unabhängig von Beschleunigungssensoren eine genaue Kurs-/Lagereferenz mit vergleichsweise hoher Bandbreite zu erhalten. Korrekturmodelle für GPS/INS-Mechanisierungen von Kurs- und Lagereferenzsystemen mit Korrektur der INS-Werte über ein Kalman-Filter sind bei Berücksichtigung unterschiedlicher Störgrößen auch aus der Buchveröffentlichung Kayton/Fried, AVIONICS NAVIGATION SYSTEMS, A WILEY-INTERSCIENCE PUBLI-CATION, Second Edition 1997, S. 72 - 98 bekannt

Die US-A-5 067 084 beschreibt ein inertiales Kurs- und Lagereferenzsystem mit einem Gyrosensor, z.B. einem faseroptischen Gyroskop. Der Skalenfaktorfehler des Systems wird bestimmt und mittels eines Kalman-Filters lassen sich die Werte des Fehlersignals filtern. Aus der EP-A-0 288 032 ist die Bestimmung des Skalenfaktorfehlers eines faseroptischen Gyroskops bekannt, weiterhin kommt ein Kalman-Filter zur Signalverarbeitung zum Einsatz. Die US-A-5 365 338 beschreibt ein faseroptisches Gyroskop, bei dem eine Skalenfaktorkorrektur aufgrund eines wellenlängenbedingten Skalenfaktorfehlers erfolgt.

Allgemein ist es auch bekannt, dass die Fehler inertialer Sensoren, wie Nullpunktfehler, Skalenfaktor und Achsenausrichtfehler bei solchen INS/GPS-Systemen mit Hilfe externer Stützinformation unter Anwendung einer Kalman-Filtertechnik geschätzt und danach zur Korrektur der Sensordaten benutzt werden können. Satelliten-Navigationssysteme, wie das US-amerikanische GPS (Global Positioning System), sind dazu besonders geeignet, da sie driftfrei mit hoher Genauigkeit die Position und die Geschwindigkeit nahezu kontinuierlich bereitstellen. Aus der Differenz zwischen den Positions- bzw. Geschwindigkeitsdaten des GPS und des inertialen Systems ist man durch Kalman-Filter in der Lage, die Fehler der inertialen Sensoren zu schätzen, um eine entsprechende Korrektur vorzunehmen.

Die Bestimmung der Sensorfehler mit Hilfe externer Stützinformation und Kalman-Filtertechnik, wie erwähnt, setzt jedoch ein bestimmtes Maß an Bewegungsdynamik des Fahrzeugs, z. B. eines Flugzeugs, voraus. Die verschiedenen Fehlermechanismen der inertialen Sensoren lassen sich nur so anregen und können dann über den Kalman-Filter beobachtet werden. Im Allgemeinen aber bewegen sich diese Fahrzeuge in einer horizontalen Ebene, wobei die Nick- und Rollbewegungen nur für kurze Dauer größere Werte annehmen. Andererseits geht bei sehr großen Lagewinkeländerungen, z. B. bei Akrobatikflügen von Flugzeugen, der GPS-Empfang ganz verloren, da die GPS-Antenne die Satellitensignale nicht mehr empfangen kann. Der Skalenfaktor lässt sich jetzt nicht mehr zufriedenstellend schätzen bzw. bestimmen. Andererseits tritt eine Erhöhung des Skalenfaktorfehlers aufgrund einer Wellenlängenänderung der Lichtquelle erst nach längerem Einsatz der Systeme in Erscheinung. Bei Kurs-/Lagereferenz-Systemen bleibt die Reduzierung der Systemgenauigkeit meistens unerkannt, da durch eine Lot- und Magnetsensorstützung der Fehler dieser Systeme weitgehend unterdrückt wird und sich damit als technisch relativ unbedenklich erweist. Bei zukünftigen Aufgaben im Bereich insbesondere einer unterstützten Trägheitsnavigation und bei hohen Anforderungen bezüglich der Lagewinkelgenauigkeit ist aber eine Verbesserung der Skalenfaktorgenauigkeit und deren Langzeitstabilität unbedingt erforderlich.

Der Erfindung liegt damit die Aufgabe zugrunde, ein Verfahren bereitzustellen, durch das sich die Skalenfaktorgenauigkeit insbesondere bei einem GPS-gestützten inertialen Kurs- und Lagereferenzsystem verbessern lässt, das mit einem mehrachsigen faseroptischen Gyroskop ausgerüstet ist, das aus einer gemeinsamen Lichtquelle gespeist wird.

Die Erfindung ist bei einem Verfahren zur Bestimmung der Kompensation des durch Wellenlängenänderung bei mehrachsigen, aus einer gemeinsamen Lichtquelle gespeisten faseroptischen Gyroskops (FOG) verursachten Skalenfehlers in einem GPS-gestützten, mit Kalman-Korrekturfilter ausgerüsteten inertialen Kurs- und Lagereferenzsystem erfindungsgemäß dadurch gekennzeichnet, dass der für eine Achse mit vergleichsweise hoher Bewegungsdynamik ermittelte Skalenfaktorfehler als Kalman-Filterkorrekturwert für die Skalenfaktor-Fehlerkorrektur aller Messachsen des FOGs mit niedrigerer Bewegungsdynamik verwendet wird.

Die Erfindung beruht auf der Beobachtung und Feststellung, dass der Skalenfaktor zwar für die vertikale Messachse eines dreiachsigen Inertialkurs- und Lagereferenzsystems bestimmt werden kann, sich jedoch für die horizontalen Messachsen nicht zufriedenstellend schätzen lässt. Dadurch ergibt sich zwar eine gute Genauigkeit bei Kursänderungen, jedoch treten erhebliche Lagefehler bei großen Lagewinkeländerungen auf. Diese Probleme lassen sich mit der Erfindung zuverlässig beseitigen.

In vorteilhafter Ausführungsform der Erfindung wird also bei einem dreiachsigen Kurs- und Lagereferenzsystem der für die Vertikalachse z ermittelte Skalenfaktorfehler zur Fehlerkompensation für die übrigen Messachsen x, y zur Skalenfaktor-Fehlerkorrektur angewendet.

Mit der Erfindung werden die technischen Möglichkeiten des Kalman-Filters mit einer modernen FOG-Technologie so verbunden, dass ein größeres Maß von Nutzen erreicht und der Skalenfaktorfehler für alle drei Messachsen insgesamt wesentlich besser kompensiert wird.

Die Erfindung und vorteilhafte Einzelheiten werden nachfolgend unter Bezug auf die Zeichnungen in beispielsweiser Ausführungsform näher erläutert. Es zeigen:
- **Fig. 1**: ein Funktions-Blockschaltbild eines durch GPS-Daten-gestützten (inertialen) Trägheitsnavigationssystems mit Kalman-Filter-Korrektur; und
- **Fig. 2**: das detailliertere Funktions-Blockschaltbild zur Erläuterung der Fehlerkorrektur insbesondere der Skalenfaktorkorrektur nach dem erfindungsgemäßen Verfahren.

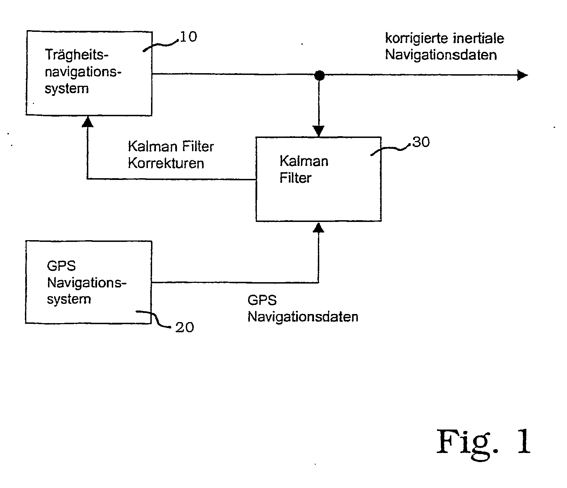

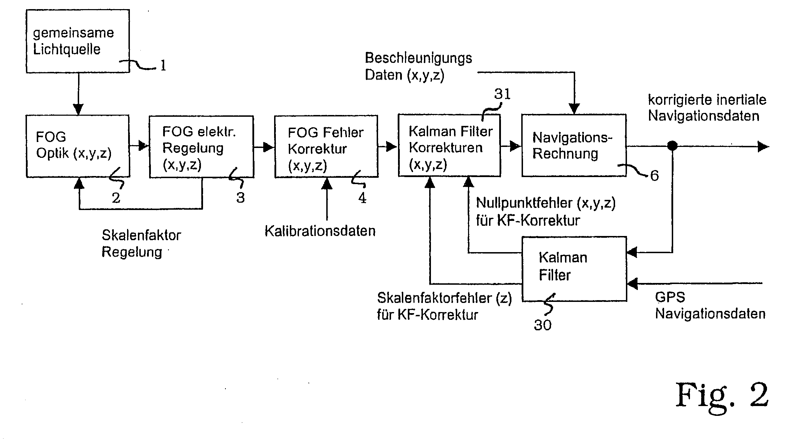

Der Skalenfaktor eines faseroptischen Gyroskops oder Faserkreisels innerhalb eines inertialen Trägheitsnavigationssystems 10 wird durch zwei Faktoren maßgeblich bestimmt Die im (nicht gezeigten FOG) durch eine äußere Drehrate erzeugte Sagnac-Phase wird durch die Wellenlänge (bzw. Frequenz) des Lichts in der Glasfaser und durch die geometrischen Abmessungen der Faserspule (umwickelte Fläche) bestimmt Bei einem rückstellenden System wird des Weiteren die Skalierung der Rückstellung (Skalierung: Drehwinkelinkrement/Sagnac-Phase) in der Faserkreisel-Regelschleife für den Skalenfaktor bestimmend. Bei einer mehrachsigen, z. B. einer dreiachsigen FOG-Architektur 2 (s. Fig. 2), die von einer gemeinsamen Lichtquelle 1 gespeist wird, bestimmt und kontrolliert eine Hilfsregelschleife 3 in der FOG-Elektronik den elektrischen Skalenfaktor. Andererseits wird der durch die geometrischen/mechanischen Abmessungen der FOG-Sensorspulen beeinflusste Skalenfaktorfehler über die Systemkalibration (Kalibrationsdaten) erfasst und mittels einer FOG-Fehlerkorrektur 4 kompensiert. Bei dieser Systemkalibration wird auch die Wellenlänge der gemeinsamen Lichtquelle 1 indirekt berücksichtigt. Insbesondere werden also Fertigungsfehler korrigiert. Änderungen der Wellenlänge der gemeinsamen Lichtquelle 1 im Betrieb werden nicht mehr erfasst. Das Funktionsschaltbild der Fig. 1 verdeutlicht insoweit den Stand der Technik, bei dem ein durch ein GPS-Navigationssystem 20 unter Verwendung eines Kalman-Filters 30 gestütztes inertiales Navigationssystem 10 veranschaulicht ist, dessen ausgangsseitige korrigierte Navigationsdaten einem übergeordneten Rechnersystem zur Verfügung gestellt werden.

Das Problem der beispielsweise durch Alterungseffekte der Lichtquelle 1 sich verändernden Skalenfaktoren ist natürlich bekannt Zur Lösung sind bisher zwei relativ aufwändige Verfahren angewendet worden. Beim ersten Verfahren setzt man eine Laser-Lichtquelle ein, bei der durch weitere optische Elemente das für den FOG-Betrieb benötigte Spektrum erzeugt wird. Teuer sind dabei vor allem die zusätzlichen optischen Komponenten, sowie die nahezu doppelte erforderliche Faserlänge aufgrund der größeren Wellenlänge dieser Lichtquellen. Eine andere vorgeschlagene Möglichkeit besteht in der direkten Messung der Wellenlänge und der damit ermöglichten rechnerischen Kompensation des zugehörigen Skalenfaktorfehlers. Der dazu benötigte interferometrische Messaufbau erfordert aber einige zusätzliche optische und elektrische Komponenten, die das Gesamtsystem erheblich verteuern. Eine markt- und konkurrenzfähige Lösung unter Anwendung dieser Möglichkeit existiert nicht

Die Erfindung nutzt unter anderem die Erkenntnis aus, dass eine Wellenlängenänderung der für alle drei Messachsen einer sogenannten FOG-Triade gemeinsamen Lichtquelle 1 sich auf alle drei Messachsen gleichermaßen auswirkt. Darauf basiert die erfindungsgemäße Idee, nämlich den sehr gut bestimmbaren Skalenfaktorfehler der vertikalen Messachse z auch auf die beiden horizontalen Messachsen x, y des faseroptischen Systems anzuwenden.

Bei einer vorteilhaften Ausführungsform der Erfindung wird zusätzlich beachtet, dass die horizontalen Achsen x, y maßgeblich an der Bestimmung der sicherheitskritischen Lagewinkel beteiligt sind, so dass die Skalenfaktor-Fehlerkorrektur nur mit einer großen Zeitkonstante erfolgen sollte. Dabei ist von Bedeutung, dass die Änderung der Wellenlänge und damit die Erhöhung des Skalenfaktorfehlers durch Alterung der Lichtquelle über einen Zeitraum von einigen Monaten erfolgt. Der genaue Zusammenhang zwischen Einsatzdauer und Wellenlängenverschiebung wurde bisher zwar noch nicht untersucht oder statistisch erfasst. Neben dem Zeitfaktor hat auch die Umwelt (Temperatur, Vibration, usw.) einen bedeutenden Einfluss. Bei Reparaturen mussten schon Lichtquellen nach Betriebszeiten von 8 bis 12 Monaten ersetzt bzw. das System nachkalibiriert werden. Die Zeitkonstante der Korrektur des Kalman-Filters sollte also in einem Bereich von 10 bis 20 Stunden liegen, wobei bei jedem neuen Flug auf dem zuletzt geschätzten Fehlerwert aufgesetzt wird. Die Berücksichtigung einer großen Zeitkonstante ist demnach unter dem Gesichtspunkt der Sicherheit unproblematisch, da nur mit vergleichsweise sehr langsamen Veränderungen der Lichtwellenlänge zu rechnen ist.

Wie die Fig. 2 erkennen lässt, werden zur Korrektur von Systemfehlem im Kalman-Filter 30 außer bestimmten Nullpunktfehlertermen für alle drei Messachsen die Skalenfaktoren für diese Achsen x, y, z im Systemblock 31 korrigiert bzw. kompensiert, und zwar nur unter Berücksichtigung eines zuvor bestimmen Skalenfaktorfehlers für die vertikale Messachse z. Die korrigierten Daten werden dann zusammen mit Beschleunigungsdaten für alle drei Achsen x, y, z der Navigationsrechnung 6 zugeführt und das Ergebnis zusammen mit den GPS-Navigationsdaten auf den Kalman-Filter 30 rückgeführt.

Die Lösungen und Vorteile der Erfindung lassen sich wie folgt zusammenfassen:
1. Bei einem GPS-gestützten inertialen Kurs- und Lagereferenzsystem mit mehreren aus einer gemeinsamen Lichtquelle gespeisten FOG-Sensoren wird mit Hilfe von aus einer relativ hohen Dynamik ausgesetzten Messachse gewonnener Systeminformation unter Anwendung von Kalman-Filtertechnik ein Skalenfaktorfehler bei allen Messachsen gleichermaßen kompensiert.
2. Diese Fehlerkorrektur wird bevorzugt mit großer Zeitkonstante angewendet, um zu verhindern, dass kurzzeitige Störungen im Sützsensor, z. B. dem FOG-Sensor, einer Vertikalachse und die damit möglicherweise verbundenen fehlerhaften Schätzungen das Inertialsystem korrumpieren können. Um zu verhindern, dass eine Fehlschätzung des Kalman-Filters das System korrumpiert, ist es vorteilhaft ein Limit für die Korrektur einzuführen und bei Erreichen dieses Limits eine Warnung bzw. eine Wartungsanforderung auszugeben.
3. Im Gegensatz zu anderen möglichen bekannten oder vorgeschlagenen Lösungen wird mit der Erfindung eine zuverlässige Reduzierung des Skalenfaktorfehlers des gesamten FOG-Systems erreicht, und zwar ohne zusätzlich Hardware-Kosten.

## Patentansprüche

1. Verfahren zur Bestimmung und Kompensation des durch Wellenlängenänderung bei mehrachsigen, aus einer gemeinsamen Lichtquelle gespeisten faseroptischen Gyroskopen (1,2,3,4), FOG, verursachten Skalenfaktorfehlers in einem GPS-gestützten (20), mit Kalman-Korrekturfilter (30) ausgerüsteten inertialen Kurs- und Lagereferenzsystem (10), **dadurch gekennzeichnet, dass** der für eine Achse mit vergleichsweise hoher Bewegungsdynamik ermittelte Skalenfaktorfehler als Kalman-Filterkorrekturwert für die Skalenfaktor-Fehlerkorrektur aller Messachsen des FOGs mit niedrigerer Bewegungsdynamik mit verwendet wird.

2. Verfahren nach Anspruch 1 bei einem drei-achsigen Kurs- und Lagereferenzsystem, **dadurch gekennzeichnet, dass** der für die Vertikalachse (z) ermittelte Skalenfaktorfehler zur Fehlerkompensation für die übrigen Messachsen (x, y) zur Skalenfaktor-Fehlerkorrektur angewendet wird.

3. Verfahren nach Anspruch 1 oder 2, **dadurch gekennzeichnet, dass** die mit Hilfe des für die Achse mit vergleichsweise hoher Bewegungsdynamik ermittelten Skalenfaktors zu bewirkende Fehlerkorrektur mit einer Zeitkonstante eingesetzt wird, die groß ist gegenüber zu erwartenden kurzzeitig wirkenden, nicht modulierbaren bzw. kompensierbaren Fehlerquellen.

## Claims

1. A method for determination of and compensation for the scale factor error caused by changes in the wavelength in multiple axis fiber-optic gyroscope (1,2,3,4) FOG, which is fed from a common light source, in a GPS-supported (20) inertial heading and attitude reference system (10) which is equipped with a Kalman correction filter (30), **characterized in that** the scale factor error determined for one axis with relatively fast motion dynamics is used as the Kalman filter correction value for the scale factor error correction for all the measurement axes of the FOG with slower motiondynamics.

2. The method as claimed in claim 1 for a three-axis track and attitude reference system, **characterized in that** the scale factor error determined for the vertical axis (z) is used for scale factor error correction, for error compensation for the other measurement axes (x, y).

3. The method as claimed in claim 1 or 2, **characterized in that** the error correction to be implemented with the aid of the scale factor determined for the axis with comparatively fast motion dynamics is used with a time constant which is long in comparison to expected short-term error sources which cannot be modulated or compensated for.

## Revendications

1. Procédé de détermination et de compensation de l'erreur de facteur d'échelle provoquée dans un gyroscope à fibre optique (1, 2, 3, 4), FOG, à plusieurs axes, alimenté à partir d'une source lumineuse commune dans un système de navigation et de position par inertie (10) équipé d'un filtre de Kalman (30) assisté par GPS (20), **caractérisé en ce que** l'erreur de facteur d'échelle déterminé pour un axe avec une dynamique de mouvement comparativement élevée est utilisée en tant que valeur de correction de filtre de Kalman pour la correction d'erreur de facteur d'échelle de tous les axes de mesure du FOG avec une dynamique de mouvement plus faible.

2. Procédé selon la revendication 1 dans le cas d'un système de navigation et de position à trois axes, **caractérisé en ce que** l'erreur de facteur d'échelle déterminée pour l'axe vertical (z) en vue de la compensation de l'erreur pour les autres axes de mesure (x, y) est utilisée pour la correction d'erreur de facteur d'échelle.

3. Procédé selon la revendication 1 ou 2, **caractérisé en ce que** la correction d'erreur à effectuer à l'aide du facteur d'échelle déterminé pour l'axe avec une dynamique de mouvement comparativement élevée est utilisée avec une constante de temps, qui est grande par rapport aux sources d'erreur ne pouvant être ni modulées ni compensées agissant brièvement auxquelles on peut s'attendre.
